# EUROPEAN PATENT APPLICATION

(11) **EP 3 319 083 A1**
(43) Date of publication of application: **09.05.2018**
(21) Application number: 17198544.3
(22) Date of filing: 26.10.2017
(51) Int. Cl.: G10L 15/22, G06F 3/16

(54) **INFORMATION PROCESSING METHOD AND NON-TEMPORARY STORAGE MEDIUM**

(30) Priority: 02.11.2016 US 201662416296 P; 26.01.2017 JP 2017012406; 27.07.2017 JP 2017145707
(71) Applicant: Panasonic Intellectual Property Corporation of America, Torrance, CA 90503 (US)
(72) Inventor: NISHIKAWA, Yuri, Osaka-shi, Osaka 540-6207 (JP); YAMAGAMI, Katsuyoshi, Osaka-shi, Osaka 540-6207 (JP)
(74) Representative: Grünecker Patent- und Rechtsanwälte PartG mbB

(57) **Abstract**

An information processing method includes: acquiring first voice information indicating a first voice of a user; outputting first phrase information generated from the first voice information to a server; acquiring first response information determined in accordance with the first phrase information from the server; outputting the first response message to a speaker based on the first response information; acquiring from the server second response information associated with the first response information therein, the second response information including a conditional branch instruction to be branched into different instructions depending on a user's reply to the first response message; acquiring second voice information indicating second voice of the user, after the output of the first response message; and causing the speaker and/or at least one device to perform an operation by following an instruction determined in accordance with the conditional blench instruction.

## Description

### BACKGROUND

### 1. Technical Field

The present disclosure relates to an information processing method and a storage medium for a system to control at least one device through dialog with a user.

### 2. Description of the Related Art

An example of speech recognition technology is disclosed in Japanese Unexamined Patent Application Publication No. 2014-71457, in which a device and program perform speech control of a device related to consumer electric products, using speech commands. The device and program store speech recognition commands that a user frequently utters, and control command information corresponding thereto, in a local "saving unit", in order to reduce time required from recognizing a command to executing an operation when recognizing user commands using a server.

### SUMMARY

In one general aspect, the techniques disclosed here feature an information processing method to be executed at in part in a computer for controlling at least one device through dialog with a user. The method includes: acquiring first voice information indicating a first voice of the user input from a microphone; outputting, to a server via a network, first phrase information generated from the first voice information; acquiring, from the server via the network, first response information determined in accordance with the first phrase information, the first response information indicating a first response message as to the first voice; outputting, to a speaker, the first response message based on the first response information; acquiring, from the server via the network, second response information associated with the first response information in the server, the second response information including a conditional branch instruction to be branched into a plurality of different instructions depending on a user's reply to the first response message; acquiring second voice information indicating a second voice of the user input from the microphone, after the outputting of the first response message, the second voice including the user's reply to the first response message; and causing the speaker and/or the at least one device to perform an operation by following an instruction that is determined in accordance with the conditional branch instruction and second phrase information generated from the second voice information. Neither the second voice information nor the second phrase information is output to the server during a period from acquiring the second voice information to causing the operation to be performed.

It should be noted that comprehensive or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1A is a diagram illustrating an example of an environment where a spoken dialogue agent system having a dialog processing device according to an embodiment is installed, and is a diagram illustrating an overall image of service provided by an information management system having the spoken dialogue agent system;
Fig. 1B is a diagram illustrating an example where a device manufacturer serves as the data center operator in Fig. 1 A;
Fig. 1C is a diagram illustrating an example where either one of a device manufacturer and a management company serves as the data center operator in Fig. 1A;
Fig. 2 is a schematic diagram illustrating the configuration of a spoken dialogue agent system according to the embodiment;
Fig. 3 is a diagram illustrating an example of the hardware configuration of a voice input/output device according to the embodiment;
Fig. 4 is a diagram illustrating an example of the hardware configuration of a device according to the embodiment;
Fig. 5 is a diagram illustrating an example of the hardware configuration of a local server according to the embodiment;
Fig. 6 is a diagram illustrating an example of the hardware configuration of a cloud server according to the embodiment;
Fig. 7 is a diagram illustrating an example of the system configuration of a voice input/output device according to the embodiment;
Fig. 8 is a diagram illustrating an example of the system configuration of a device according to the embodiment;
Fig. 9 is a diagram illustrating an example of the system configuration of a local server according to the embodiment;
Fig. 10 is a diagram illustrating an example of the system configuration of a cloud server according to the embodiment;
Fig. 11 is a specific example of a local dictionary database according to the embodiment;
Fig. 12A is a specific example of a dialog rule database according to the embodiment;
Fig. 12B is a specific example of an offload command generating database according to the embodiment;
Fig. 13A is a sequence diagram of communication processing for reducing response time of a spoken dialogue agent system according to the embodiment;
Fig. 13B is a sequence diagram of communication processing for reducing response time of a spoken dialogue agent system according to the embodiment;
Fig. 14 is a diagram illustrating an overall image of service provided by an information management system according to a type 1 service (in-house data center type cloud service), to which the spoken dialog agent system according to the embodiment and modifications is applicable;
Fig. 15 is a diagram illustrating an overall image of service provided by an information management system according to a type 2 service (IaaS usage type cloud service), to which the spoken dialog agent system according to the embodiment and modifications is applicable;
Fig. 16 is a diagram illustrating an overall image of service provided by an information management system according to a type 3 service (PaaS usage type cloud service), to which the spoken dialog agent system according to the embodiment and modifications is applicable; and
Fig. 17 is a diagram illustrating an overall image of service provided by an information management system according to a type 4 service (SaaS usage type cloud service), to which the spoken dialog agent system according to the embodiment and modifications is applicable.

### DETAILED DESCRIPTION

### [Underlying Knowledge Forming Basis for Technology of the Present Disclosure]

The Present Inventors have found that the following problem occurs in the conventional art such as that disclosed in Japanese Unexamined Patent Application Publication No. 2014-71457. That is to say, the method and device according to Japanese Unexamined Patent Application Publication No. 2014-71457 only assume dialog on a one-question-one-answer basis. Such a method and device may require a long response time for dialog other than on a one-question-one-answer basis, or may not be able to respond at all. The Present Inventors studied technology to reduce device response time between the local side and cloud side with regard to dialog with multiple exchanges. The Present Inventors have found that response time of a cloud-based spoken dialog agent that controls devices through dialog with multiple exchanges can be reduced, by offloading simple recognition commands and corresponding control commands to the local side, thereby reducing the load. The Present Inventors thus have studied the following improvement measures.

A dialog processing device according to an aspect of the present disclosure includes an acquisition unit to acquire speech recognition results, a dialog processing unit that decides response information based on speech recognition results acquired by the acquisition unit, and decide processing information according to the response information, where processing information includes estimated reply information regarding the user's reply estimated with regard to the response information, and action control information in accordance with the estimated reply information, and a communication unit that transmits the decided response information and the processing information.

According to the above aspect, the dialog processing device decides and transmits response information based on speech recognition results, and processing information in accordance with the response information. A device that receives the response information and processing information from the dialog processing device can output to the user a response as to recognition results of the user's voice based on response information, and can perform action control corresponding to the user's reply to the response message, based on the estimated reply information and action control information in the processing information. Processing information is not information generated after receiving a reply from the user in response to the reply, but is information set beforehand. Accordingly, when receiving a reply from the user, the device does not have to communicate with the dialog processing device in order to acquire information corresponding to the reply. Thus, the number of times of communication between the device and the dialog processing device when performing dialog with multiple exchanges with the user is reduced, and the response time of the device and the dialog processing device can be reduced.

In the dialog processing device according to the above aspect, for example, the communication unit may receive action control result information indicating the results of action control performed using action control information. According to the above aspect, the dialog processing device can end an action relating to dialog processing between the user and a device that receives information from the dialog processing device, by receiving action control result information. Accordingly, unnecessary standby and actions of the dialog processing device can be reduced.

In the dialog processing device according to the above aspect, for example, the communication unit may transmit response information and processing information together. According to the above aspect, the frequency of the dialog processing device performing communication is reduced, and the response time of the dialog processing device and the device that receives information from the dialog processing device can be reduced. Specifically, the dialog processing device transmits processing information without confirming the reply of the user as to the response information, so communication for conforming the reply of the user is unnecessary. Further, a situation can be prevented where the device that receives information from the dialog processing device has received a reply as to the response information from the user but has not received processing information yet, and cannot perform the next action, leading to delay in processing.

In the dialog processing device according to the above aspect, for example, the acquisition unit may acquire speech recognition results via the communication unit. According to the above aspect, the dialog processing device acquires speech recognition results from a device at a remote location. Accordingly, the dialog processing device can be configured without being influenced by the environment where the voice was acquired.

A dialog processing device according to another aspect of the present disclosure includes an acquisition unit that acquires speech recognition results, a communication unit that receives response information based on first speech recognition results acquired by the acquisition unit, and processing information in accordance with the response information, the processing information including estimated reply information regarding the user's reply estimated with regard to the response information, and action control information in accordance with the estimated reply information, and an action control unit that controls actions based on the action control information, in accordance with results of matching second speech recognition results acquired by the acquisition unit with the estimated reply information.

According to the above aspect, the dialog processing device can output a response message to the user as to the first speech recognition results, based on response information based on the first speech recognition results of the voice of the user, and can perform action control corresponding to the reply from the user as to the response message, based on the estimated reply information and action control information in the processing information. Further, the dialog processing device can perform action based on the action control information corresponding to second speech recognition results of the voice of the user. Processing information is not information generated after receiving a reply from the user in response to the reply, but is information set beforehand. Accordingly, when receiving the second speech recognition results, the dialog processing device does not have to communicate to acquire information corresponding thereto. Thus, the response time of the dialog processing device can be reduced when performing dialog with multiple exchanges with the user.

In the dialog processing device according to the another aspect above, for example, the communication unit may receive both response information and processing information. According to the above aspect, the frequency of communication by the dialog processing device is reduced, and response time of the dialog processing device can be reduced. Specifically, the dialog processing device receives processing information before acquiring the user's reply as to the response information, so there is no need to perform communication corresponding to the user's reply. Further, a situation can be prevented in which the dialog processing device has received a reply as to the response information from the user but has not received processing information yet, and cannot perform the next action, leading to delay in processing.

In the dialog processing device according to the another aspect above, for example, the communication unit may transmit the first speech recognition results. According to the above aspect, processing based on the first speech recognition results is performed by a device different from the dialog processing device. This reduces the processing load on the dialog processing device, and processing speed can be improved.

In the dialog processing device according to the another aspect above, for example, the second speech recognition results may be speech recognition results after a response based on response information received by the communication unit has been played. According to the above aspect, the second speech recognition results may include the user's reply to a response message based on response information. Accordingly, the dialog processing device can perform processing appropriately corresponding to the user's reply.

In the dialog processing device according to the above aspect and another aspect, for example, processing information may include a plurality of sets of the estimated reply information and the action control information. According to the above aspect, control corresponding to various replies by the user can be performed.

In the dialog processing device according to the above aspect and another aspect, for example, action control information may include second response information as to a user's reply, and action instruction information including an action instruction as to an object of action. According to the above aspect, an object of control can be controlled during actions based on action control information, by presenting a response to the user as to a reply, and receiving confirmation.

In the dialog processing device according to the above aspect and another aspect, for example, a user reply may include a message, estimated reply information may include message information corresponding to the content of the message, and action control information may include second response information and action instruction information corresponding to the message information.

A dialog processing method according to an aspect of the present disclosure includes acquiring speech recognition results, deciding response information based on the acquired speech recognition results, deciding processing information in accordance with response information, and transmitting response information and processing information that has been decided. Processing information includes estimated reply information regarding a user's reply estimated with regard to the response information, and action control information in accordance with the estimated reply information.

A program according to an aspect of the present disclosure causes a computer perform control including acquiring first speech recognition results, and receiving response information based on the first speech recognition results that have been transmitted, and processing information in accordance with the response information. Processing information here includes estimated reply information regarding a user's reply estimated with regard to the response information, and action control information in accordance with the estimated reply information, based on action control information in accordance with the results of matching second speech recognition results that are acquired and the estimated reply information.

These general or specific aspects may be realized by a system, method, integrated circuit, computer program, or computer-readable recording medium such as a CD-ROM, and may be realized by any combination of a system, method, integrated circuit, computer program, and recording medium.

The following is a detailed description of an embodiment with reference to the drawings. Note that the embodiments described below are all specific examples of the technology of the present disclosure. Accordingly, values, shapes components, steps, the order of steps, and so forth illustrated in the following embodiments, are only exemplary, and do not restrict the present disclosure. Components in the following embodiments which are not included in an independent Claim indicating a highest order concept are described as optional components. Also, the contents of all embodiments may be combined.

Note that in the present disclosure, "at least one of A and B" is to be understood to mean the same as "A and/or B".

### Embodiment

### [Overall Image of Provided Service]

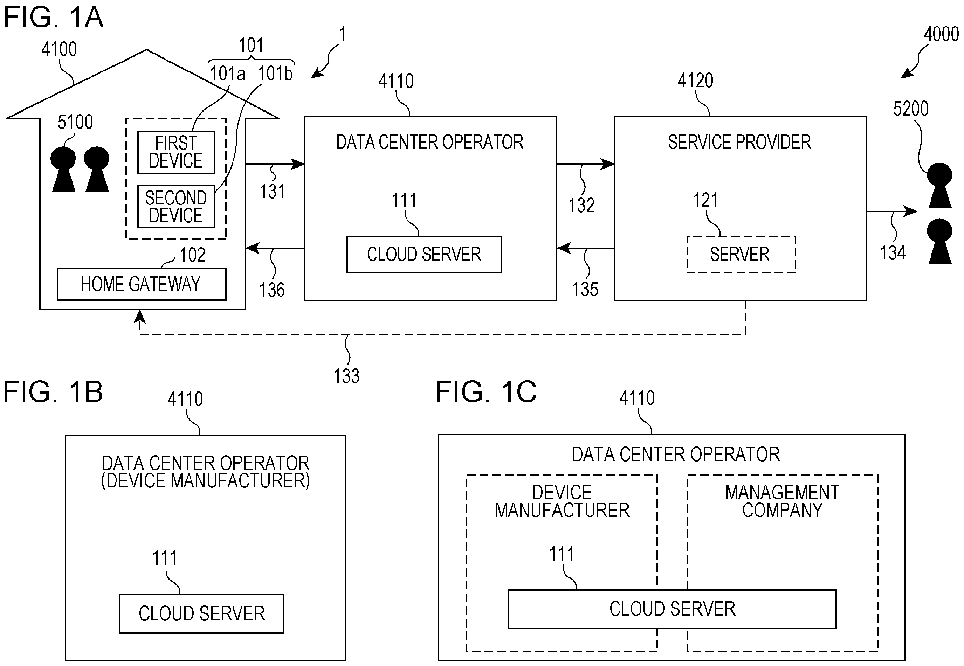

First, an overall image of the service which an information management system, in which a spoken dialog agent system 1 having a dialog processing apparatus according to an embodiment is disposed, provides, will be described with reference to Figs. 1A through 1C. Fig. 1A is a diagram illustrating an example of an environment where a spoken dialog agent system having a dialog processing device according to the embodiment is installed, and is a diagram illustrating an overall image of service provided by an information management system having the spoken dialog agent system. Fig. 1B is a diagram illustrating an example where a device manufacturer serves as the data center operator in Fig. 1A. Fig. 1C is a diagram illustrating an example where either one or both of a device manufacturer and a management company serves as the data center operator in Fig. 1A. Note that the dialog processing device may be a later-described home gateway (also referred to as "local server") 102, or may be a cloud server 111, or may be an arrangement that includes the home gateway 102 and cloud server 111.

An information management system 4000 includes a group 4100, a data center operator 4110, and service provider 4120, as illustrated in Fig. 1A. The group 4100 is, for example, a corporation, an organization, a home, or the like. The scale thereof is irrelevant. The group 4100 has multiple devices 101 including a first device 101 a and a second device 101 b, and a home gateway 102. An example of multiple devices 101 is home electric appliances. The multiple devices 101 may include those which are capable of connecting to the Internet, such as a smartphone, personal computer (PC), television set, etc., and may also include those which are incapable of connecting to the Internet on their own, such as lighting, washing machine, refrigerator, etc., for example. The multiple devices 101 may include those which are incapable of connecting to the Internet on their own but can be connected to the Internet via the home gateway 102. A user 5100 uses the multiple devices 101 within the group 4100.

The data center operator 4110 includes a cloud server 111. The cloud server 111 is a virtual server which collaborates with various devices over a communication network such as the Internet. The cloud server 111 primarily manages enormously large data (big data) or the like that is difficult to handle with normal database management tools and the like. The data center operator 4110 manages data, manages the cloud server 111, and serves as an operator of a data center which performs the management. The services provided by the data center operator 4110 will be described in detail later. Note that description will be made hereinafter that the Internet is used as the communication network, but the communication network is not restricted to the Internet.

Now, the data center operator 4110 is not restricted just to management of data and management of the cloud server 111. For example, in a case where an appliance manufacturer which develops or manufactures one of the electric appliances of the multiple devices 101 manages the data or manages the cloud server 111 or the like, the appliance manufacturer serves as the data center operator 4110, as illustrated in Fig. 1B. Also, the data center operator 4110 is not restricted to being a single company. For example, in a case where an appliance manufacturer and a management company manage data or manage the cloud server 111 either conjointly or in shared manner, as illustrated in Fig. 1C, both, or one or the other, serve as the data center operator 4110.

The service provider 4120 includes a server 121. The scale of the server 121 here is irrelevant, and also includes memory or the like in a PC used by an individual, for example. Further, there may be cases where the service provider 4120 does not include a server 121.

Note that the home gateway 102 is not indispensable to the above-described information management system 4000. In a case where the cloud server 111 performs all data management for example, the home gateway 102 is unnecessary. Also, there may be cases where there are no devices incapable of Internet connection by themselves, such as in a case where all devices 101 in the home are connected to the Internet.

Next, the flow of information in the information management system 4000 will be described. The first device 101 a and the second device 101 b in the group 4100 each transmit log information to the cloud server 111 of the data center operator 4110. The cloud server 111 collects log information from the first device 101 a or the second device 101 b (arrow 131 in Fig. 1 A). Here, log information is information indicating the operating state of the multiple devices 101 for example, date and time of operation, and so forth. For example, log information includes television viewing history, recorder programming information, date and time of the washing machine running, amount of laundry, date and time of the refrigerator door opening and closing, number of times of the refrigerator door opening and closing, and so forth, but is not restricted to these, and various types of information which can be acquired from the various types of devices 101 may be included. The log information may be directly provided to the cloud server 111 from the multiple devices 101 themselves over the Internet. Alternatively, the log information may be temporarily collected from the multiple devices 101 to the home gateway 102, and be provided from the home gateway 102 to the cloud server 111.

Next, the cloud server 111 of the data center operator 4110 provides the collected log information to the service provider 4120 in a certain increment. The certain increment here may be an increment in which the data center operator 4110 can organize the collected information and provide to the service provider 4120, or may be in increments requested by the service provider 4120. Also, the log information has been described as being provided in certain increments, but the amount of provided information of the log information may change according to conditions, rather than being provided in certain increments. The log information is saved in the server 121 which the service provider 4120 has, as necessary (arrow 132 in Fig. 1 A).

The service provider 4120 organizes the log information into information suitable for the service to be provided to the user, and provides to the user. The user to which the information is to be provided may be the user 5100 who uses the multiple devices 101, or may be an external user 5200. An example of a way to provide information to the users 5100 and 5200 may be to directly provide information from the service provider 4120 to the users 5100 and 5200 (arrows 133 and 134 in Fig. 1 A), for example. Also, an example of a way to provide information to the user 5100 may be to route the information to the user 5100 through the cloud server 111 of the data center operator 4110 again, for example (arrows 135 and 136 in Fig. 1 A). Alternatively, the cloud server 111 of the data center operator 4110 may organize the log information into information suitable for the service to be provided to the user, and provide to the service provider 4120. Also, the user 5100 may be different from the user 5200 or may be the same.

### [Configuration of Spoken Dialog Agent System]

The following is a description of the configuration of the spoken dialog agent system 1 according to the embodiment. The spoken dialog agent system 1 is a system that reduces response time as to spoken instructions from the user. The spoken dialog agent system 1 according to the present embodiment is a cloud-based spoken dialog agent system that controls devices by dialog with multiple exchanges. The response time thereof is reduced by offloading simple recognition commands and corresponding control commands to the local side.

With regard to the configuration of the spoken dialog agent system 1, description will first be made below in order regarding the configuration of the inductor module, the hardware configuration of a voice input/output device, the hardware configuration of a device, the hardware configuration of a local server, the hardware configuration of a cloud server, functional blocks of the voice input/output device, functional blocks of the device, functional blocks of the local server, and functional blocks of the cloud server. Further, description will be made regarding a specific example of a local dictionary database, a specific example of a dialog rule database, and a specific example of an offload command generating database, with regard to the configuration of the spoken dialog agent system 1. With regard to the operations of the inductor module 1, a sequence of processing to reduce the response time by the inductor module 1 will be described.

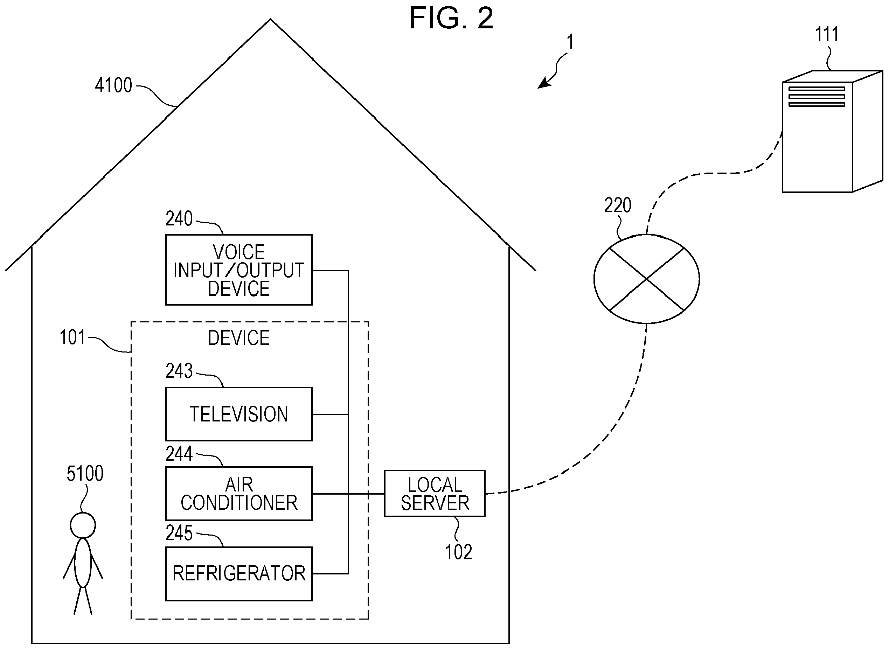

The configuration of the spoken dialog agent system 1 including the dialog processing device according to the embodiment will be described with reference to Fig. 2. Fig. 2 is a schematic diagram illustrating the configuration of the spoken dialog agent system 1 according to the embodiment. The spoken dialog agent system 1 includes a voice input/output device 240, multiple devices 101, the local server 102, an information communication network 220, and the cloud server 111. The local server 102 is an example of a home gateway. The information communication network 220 is an example of a communication network, the Internet for example. The multiple devices 101 are a television set 243, an air conditioner 244, and a refrigerator 245 in the embodiment. The multiple devices 101 are not restricted to the devices which are the television set 243, air conditioner 244, and the refrigerator 245, and any device may be included. The voice input/output device 240, multiple devices 101, and local server 102, are situated in the group 4100. The local server 102 may make up the dialog processing device, the cloud server 111 may make up the dialog processing device, or the local server 102 and cloud server 111 may make up the dialog processing device together.

In the example illustrated in Fig. 2, the user 5100, who is a person, is present in the group 4100 where the spoken dialog agent system 1 is situated. The user 5100 also is the one who speaks to the spoken dialog agent system 1.

The voice input/output device 240 is an example of a sound collection unit which collects voice within the group 4100, and a voice output unit which outputs voice to the group 4100. The group 4100 is a space where the voice input/output device 240 can provide information to the users by voice. The voice input/output device 240 recognizes the voice of the user 5100 in the group 4100, and provides voice information from the voice input/output device 240, and also controls the multiple device 101, in accordance with instructions by the user 5100 by the recognized voice input. More specifically, the voice input/output device 240 displays contents, replies to user questions from the user 5100, and controls the devices 101, in accordance with instructions by the user 5100 by the recognized voice input.

Also here, connection of the voice input/output device 240, the multiple devices 101, and the local server 102, can be performed by wired or wireless connection. Various types of wireless communication are applicable for wireless connection, including, for example, local area networks (LAN) such as Wireless Fidelity (Wi-Fi, a registered trademark) and so forth, and Near-Field Communication such as Bluetooth (a registered trademark), ZigBee (a registered trademark), and so forth.

Also, at least part of the voice input/output device 240, local server 102, and devices 101 may be integrated. For example, the functions of the local server 102 may be built into the voice input/output device 240, with the voice input/output device 240 functioning as a local terminal communicating with the cloud server 111 by itself. Alternatively, the voice input/output device 240 may be built into each of the devices 101, or one of the multiple devices 101. In the case of the latter, the device 101 into which the voice input/output device 240 has been built in may control the other devices 101. Alternatively, of the functions of the voice input/output device 240 and the functions of the local server 102, at least the functions of the local server 102 may be built into each of the devices 101, or one of the multiple devices 101. In the case of the former, each device 101 may function as a local terminal communicating with the cloud server 111 by itself. In the case of the latter, the other devices 101 may communicate with the cloud server 111 via the one device 101 that is a local terminal in which the functions of the local server 102 have been built in.

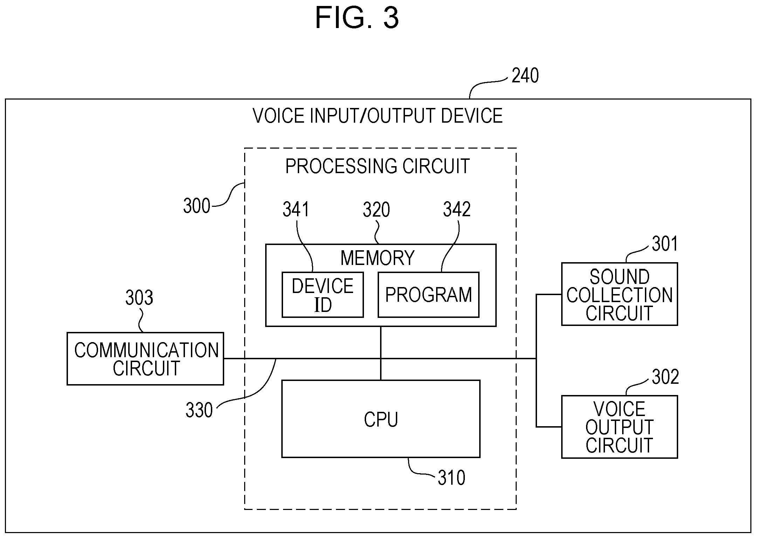

Further, the voice input/output device 240, devices 101, local server 102, and cloud server 111 will be described from the perspective of hardware configuration. Fig. 3 is a diagram illustrating an example of the hardware configuration of the voice input/output device 240 according to the embodiment. As illustrated in Fig. 3, the voice input/output device 240 has a processing circuit 300, a sound collection circuit 301, a voice output circuit 302, and a communication circuit 303. The processing circuit 300, sound collection circuit 301, voice output circuit 302, and communication circuit 303, are mutually connected by a bus 330, and can exchange data and commands with each other.

The processing circuit 300 may be realized by a combination of a central processing unit (CPU) 310, and memory 320 storing a device ID 341 and computer program 342. The CPU 310 controls the operations of the voice input/output device 240, and also may control the operations of the devices 101 connected via the local server 102. In this case, the processing circuit 300 transmits control commands to the devices 101 via the local server 102, but may directly transmit to the devices 101. The CPU 310 executes a command group described in the computer program 342 loaded to the memory 320. Accordingly, the CPU 310 can realize various types of functions. A command group to realize the later-described actions of the voice input/output device 240 is written in the computer program 342. The above-described computer program 342 may be stored in the memory 320 of the voice input/output device 240 beforehand, as a product. Alternatively, the computer program 342 may be recorded on a recording medium such as a Compact Disc Read-Only Memory (CD-ROM) and distributed through the market as a product, or may be transmitted over electric communication lines such as the Internet, and the computer program 342 acquired by way of the recording medium or electric communication lines may be stored in the memory 320.

Alternatively the processing circuit 300 may be realized as dedicated hardware configured to realize the operations described below. Note that the device ID 341 is an identifier uniquely assigned to the device 101. The device ID 341 may be independently assigned by the manufacturer of the device 101, or may be a physical address uniquely assigned on a network (a so-called Media Access Control (MAC) address) as a principle.

Description has been made regarding Fig. 3 that the device ID 341 is stored in the memory 320 where the computer program 342 is stored. However, this is one example of the configuration of the processing circuit 300. The computer program 342 may be stored in random access memory (RAM) or ROM, and the device ID 341 stored in flash memory, for example.

The sound collection circuit 301 collects user voice and generates analog voice signals, and converts the analog voice signals into digital data which is transmitted to the bus 330.

The voice output circuit 302 converts the digital data received over the bus 330 into analog voice signals, and outputs these analog voice signals.

The communication circuit 303 is a circuit for communicating with another device (e.g., the local server 102) via a wired communication or wireless communication. The communication circuit 303 performs communication with another device via a network, for example via a wired LAN such as a network conforming to the Ethernet (a registered trademark) standard in the present embodiment, although this is not restrictive. The communication circuit 303 transmits log information and ID information generated by the processing circuit 300 to the local server 102. The communication circuit 303 also transmits signals received from the local server 102 to the processing circuit 300 via the bus 330.

The voice input/output device 240 may include, besides the components that are illustrated, other components for realizing functions required of that device.

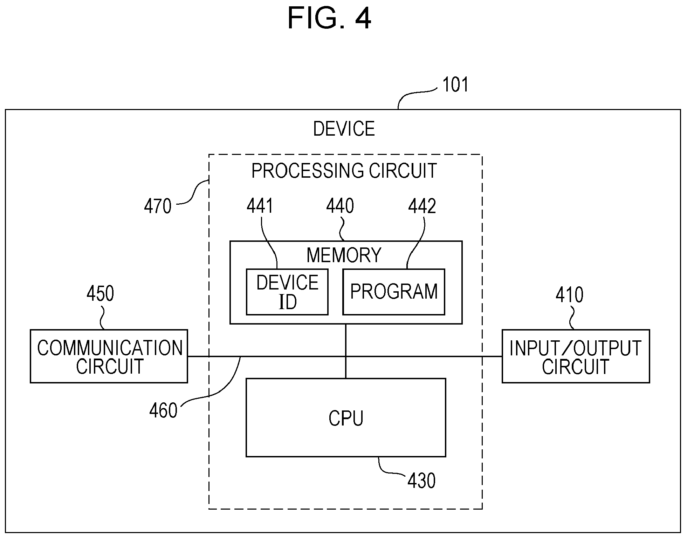

Fig. 4 is a diagram illustrating an example of the hardware configuration of a device 101 according to the embodiment. The television set 243, air conditioner 244, and refrigerator 245 in Fig. 2 are examples of the device 101. The device 101 includes an input/output circuit 410, a communication circuit 450, and a processing circuit 470, as illustrated in Fig. 4. These are mutually connected by a bus 460, and can exchange data and commands with each other.

The processing circuit 470 may be realized by a combination of a CPU 430, and memory 440 storing a device ID 441 and computer program 442. The CPU 430 controls the operations of the device 101. The CPU 430 can execute a command group described in the computer program 442 loaded to the memory 440, and realize various types of functions. A command group to realize the later-described actions of the device 101 is written in the computer program 442. The above-described computer program 442 may be stored in the memory 440 of the device 101 beforehand, as a product. Alternatively, the computer program 442 may be recorded on a recording medium such as a CD-ROM and distributed through the market, or may be transmitted over electric communication lines such as the Internet, and the computer program 442 acquired by way of the recording medium or electric communication lines may be stored in the memory 440.

Alternatively, the processing circuit 470 may be realized as dedicated hardware configured to realize the operations described below. Note that the device ID 441 is an identifier uniquely assigned to the device 101. The device ID 441 may be independently assigned by the manufacturer of the device 101, or may be a physical address uniquely assigned on a network (a so-called MAC address) as a principle.

Description has been made regarding Fig. 4 that the device ID 441 is stored in the memory 440 where the computer program 442 is stored. However, this is one example of the configuration of the processing circuit 470. The computer program 442 may be stored in RAM or ROM, and the device ID 441 may be stored in flash memory, for example.

The input/output circuit 410 outputs results processed by the processing circuit 470. The input/output circuit 410 also converts input analog signals into digital data and transmits to the bus 330.

The communication circuit 450 is a circuit for communicating with another device (e.g., the local server 102) via wired communication or wireless communication. The communication circuit 450 performs communication with another device via a network, for example via a wired LAN such as a network conforming to the Ethernet (a registered trademark) standard, although this is not restrictive. The communication circuit 450 transmits log information and ID information generated by the processing circuit 470 to the local server 102. The communication circuit 450 also transmits signals received from the local server 102 to the processing circuit 470 via the bus 460.

The device 101 may include, besides the components that are illustrated, other components for realizing functions required of the device 101.

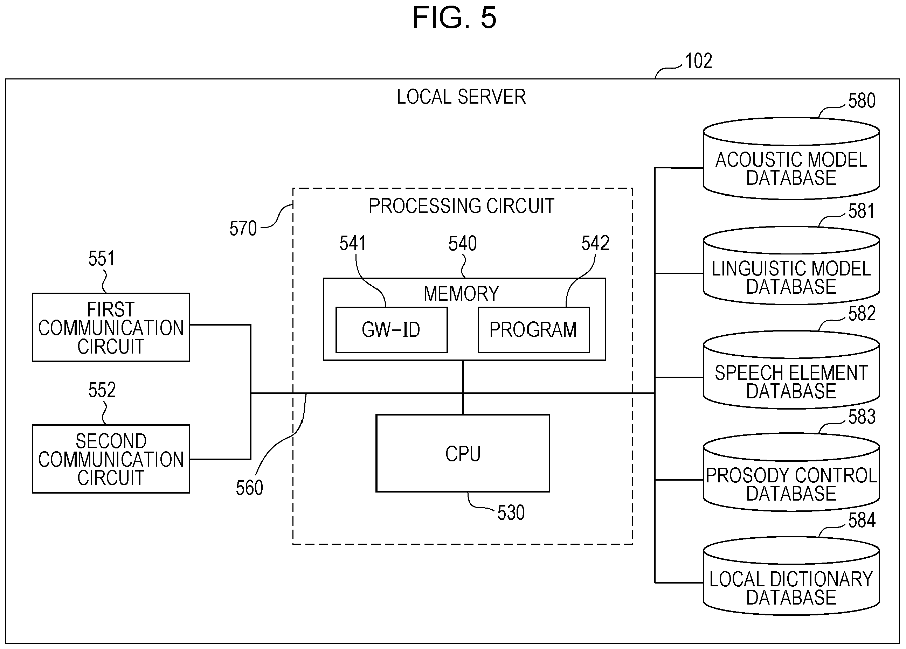

Fig. 5 is a diagram illustrating an example of the hardware configuration of the local server 102. The local server 102 serves as a gateway between the voice input/output device 240, device 101, and information communication network 220. The local server 102 includes a first communication circuit 551, a second communication circuit 552, a processing circuit 570, an acoustic model database 580, a linguistic model database 581, a speech element database 582, a prosody control database 583, and a local dictionary database 584, as components, as illustrated in Fig. 5. These components are connected to each other by a bus 560, and can exchange data and commands with each other.

The processing circuit 570 is connected to the acoustic model database 580, linguistic model database 581, speech element database 582, prosody control database 583, and local dictionary database 584, and can acquire and edit management information stored in the databases. Note that while the acoustic model database 580, linguistic model database 581, speech element database 582, prosody control database 583, and local dictionary database 584, are components within the local server 102 in the present embodiment, these may be provided outside of the local server 102. In this case, a communication line such as an Internet line, wired or wireless LAN, or the like, may be included in the connection arrangement between the databases and the components of the local server 102, in addition to the bus 560.

The first communication circuit 551 is a circuit for communicating with other devices (e.g., the voice input/output device 240 and device 101) via wired communication or wireless communication. The first communication circuit 551 communicates with other devices via a network in the present embodiment, such as communication via a wired LAN such as a network conforming to the Ethernet (a registered trademark) standard or the like, for example, although this is not restrictive. The first communication circuit 551 transmits log information and ID information generated by the processing circuit 570 to the voice input/output device 240 and device 101. The first communication circuit 551 also transmits signals received from the voice input/output device 240 and device 101 to the processing circuit 570 via the bus 560.

The second communication circuit 552 is a circuit that communicates with the cloud server 111 via wired communication or wireless communication. The second communication circuit 552 connects to a communication network via wired communication or wireless communication, and further communicates with the cloud server 111, via a communication network. The communication network in the present embodiment is the information communication network 220. The second communication circuit 552 performs communication via a wired LAN such as a network conforming to the Ethernet (a registered trademark) standard, for example. The second communication circuit 552 exchanges various types of information with the cloud server 111.

The processing circuit 570 may be realized by a combination of a CPU 530, and memory 540 storing a uniquely-identifiable gateway ID (hereinafter also referred to as GW-ID) 541 and computer program 542. The CPU 530 controls the operations of the local server 102, and also may control the operations of the voice input/output device 240 and device 101. The gateway ID 541 is an identifier uniquely given to the local server 102. The gateway ID 541 may be independently assigned by the manufacturer of the local server 102, or may be a physical address uniquely assigned on a network (a so-called MAC address) as a principle. The CPU 530 can execute a command group described in the computer program 542 loaded to the memory 540, and realize various types of functions. A command group to realize the operations of the local server 102 is written in the computer program 542. The above-described computer program 542 may be stored in the memory 540 of the local server 102 beforehand, as a product. Alternatively, the computer program 542 may be recorded on a recording medium such as a CD-ROM and distributed through the market as a product, or may be transmitted over electric communication lines such as the Internet, and the computer program 542 acquired by way of the recording medium or electric communication lines may be stored in the memory 540.

Alternatively, the processing circuit 570 may be realized as dedicated hardware configured to realize the operations described below. The local server 102 may include other components besides those illustrated, to realize functions required of the local server 102.

Description has been made regarding Fig. 5 that the gateway ID 541 is stored in the memory 540 where the computer program 542 is stored. However, this is one example of the configuration of the processing circuit 570. The computer program 542 may be stored in RAM or ROM, and the gateway ID 541 may be stored in flash memory, for example.

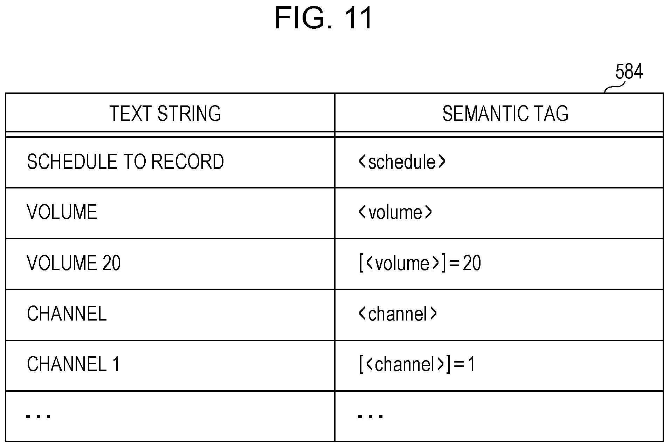

The acoustic model database 580 has registered therein various acoustic models including frequency patterns such as voice waveforms and the like, and text strings corresponding to speech, and so forth. The linguistic model database 581 has registered therein various types of linguistic models including words, order of words, and so forth. The speech element database 582 has registered therein various types of speech elements in increments of phonemes or the like, and expressing features of phonemes. The prosody control database 583 has registered therein various types of information to control prosodies of text strings. The local dictionary database 584 has registered therein various types of text strings, and semantic tags corresponding to each of the text strings in a correlated manner. Text strings are made up of words, phrases, and so forth. Semantic tags indicate logical expressions representing the meanings of text strings. For example, multiple text strings of which the meanings are similar have the same semantic tag set in common. For example, a semantic tag represents the name of a task object, the task content of a task object, and so forth, by a keyword. Fig. 11 illustrates an example of combinations of text strings and semantic tags corresponding to the text strings, for example.

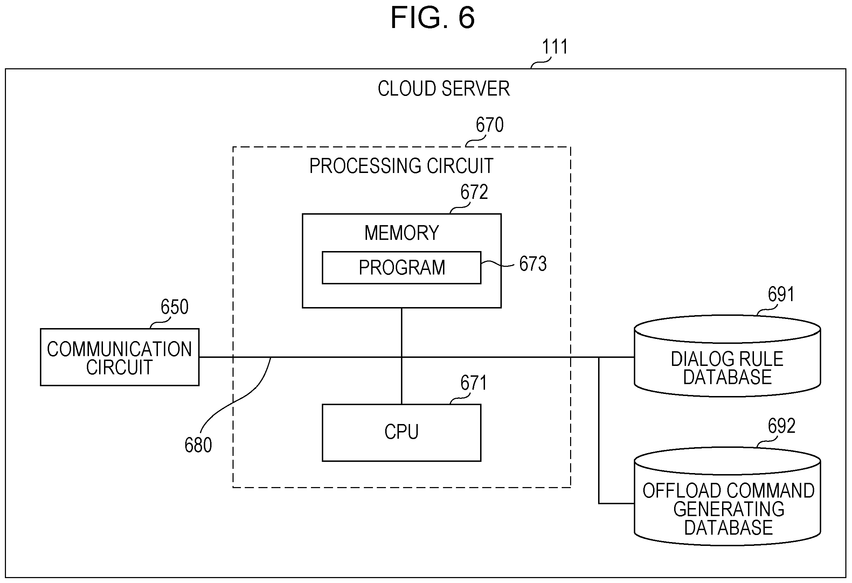

Fig. 6 illustrates an example of the hardware configuration of the cloud server 111. The cloud server 111 includes a communication circuit 650, a processing circuit 670, a dialog rule database 691, and an offload command generating database 692, as components thereof, as illustrated in Fig. 6. These components are connected to each other by a bus 680, and can exchange data and commands with each other.

The processing circuit 670 has a CPU 671, and memory 672 storing a program 673. The CPU 671 controls the operations of the cloud server 111. The CPU 671 executes a command group described in the computer program 673 loaded to the memory 672. Thus, the CPU 671 can realize various functions. A command group to realize the later-described operations of the cloud server 111 is written in the computer program 673. The above-described computer program 673 may be recorded on a recording medium such as a CD-ROM and distributed through the market as a product, or may be transmitted over electric communication lines such as the Internet. A device having the hardware illustrated in Fig. 6 (e.g., a PC) can function as the cloud server 111 according to the present embodiment by reading in this computer program 673.

The processing circuit 670 is connected to the dialog rule database 691 and offload command generating database 692, and can acquire and edit management information stored in the databases. Note that while the dialog rule database 691 and offload command generating database 692 are components within the cloud server 111 in the present embodiment, these may be provided outside of the cloud server 111. In this case, a communication line such as an Internet line, wired or wireless LAN, or the like, may be included in the connection arrangement between the databases and the components of the cloud server 111, in addition to the bus 680. The dialog rule database 691 has registered therein various semantic tags, and conditions relating to the semantic tags, in an associated manner, which will be described in detail later. The offload command generating database 692 has registered therein response messages of the spoken dialog agent system 1, and command data (offload command data in the present embodiment) for the local server 102 corresponding to response messages, in a corresponding manner. The offload command data is command data corresponding to dialog with multiple patterns between the user and the spoken dialog agent system 1, configured to reduce the load of the local server 102. The offload command data is also command data that can handle dialog with multiple exchanges between the user and the spoken dialog agent system 1.

The communication circuit 650 is a circuit for communicating with other devices (e.g., the local server 102) via wired communication or wireless communication. The communication circuit 650 connects to a communication network via wired communication or wireless communication, and further communicates with other devices (e.g., the local server 102) via the communication network. The communication network in the present embodiment is the information communication network 220. The communication circuit 650 performs communication via a wired LAN such as a network conforming to the Ethernet (a registered trademark) standard, for example.

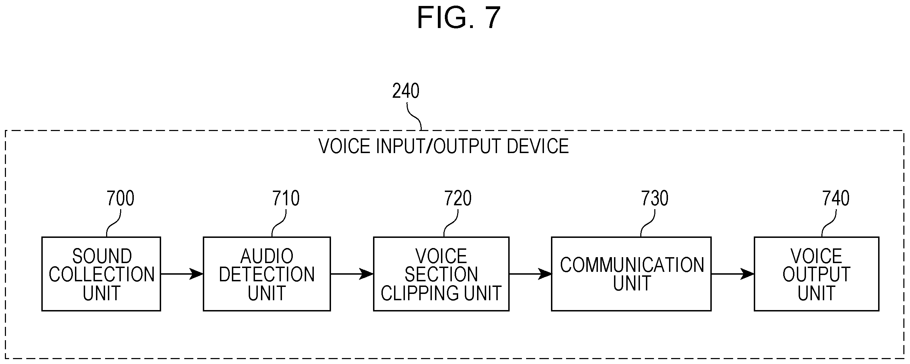

The voice input/output device 240, device 101, local server 102, and cloud server 111 will be described from the perspective of system configuration. Fig. 7 is a block diagram illustrating an example of the system configuration of the voice input/output device 240. The voice input/output device 240 includes a sound collection unit 700, an audio detection unit 710, a voice section clipping unit 720, a communication unit 730, and a voice output unit 740, as illustrated in Fig. 7.

The sound collection unit 700 corresponds to the sound collection circuit 301 in Fig. 3. The sound collection unit 700 collects sound from the user and generates analog audio signals, and also converts the generated analog audio signals into digital data and generates audio signals from the converted digital data.

The audio detection unit 710 and the voice section clipping unit 720 are realized by the processing circuit 300 in Fig. 3. The CPU 310 which has executed the computer program 342 functions at one point as the audio detection unit 710 for example, and at another point functions as the voice section clipping unit 720. Note that at least one of these two components may be realized by hardware performing dedicated processing, such as a digital signal processor (DSP) or the like.

The audio detection unit 710 determines whether or not audio has been detected. For example, in a case where the level of detected audio is at or below a predetermined level, the audio detection unit 710 determines that audio has not been detected. The voice section clipping unit 720 extracts a section from the acquired audio signals where there is voice. This section is, for example, a time section.

The communication unit 730 corresponds to the communication circuit 303 in Fig. 3. The communication unit 730 performs communication with another device other than the voice input/output device 240 (e.g., the local server 102), via wired communication or wireless communication such as a network. The communication unit 730 performs communication via wired LAN such as a network conforming to the Ethernet (a registered trademark) standard, for example. The communication unit 730 transmits voice signals of the section which the voice section clipping unit 720 has extracted to another device. The communication unit 730 also hands voice signals received from another device to the voice output unit 740.

The voice output unit 740 corresponds to the voice output circuit 302 in Fig. 3. The voice output unit 740 converts the voice signals which the communication unit 730 has received into analog voice signals, and outputs the analog voice signals.

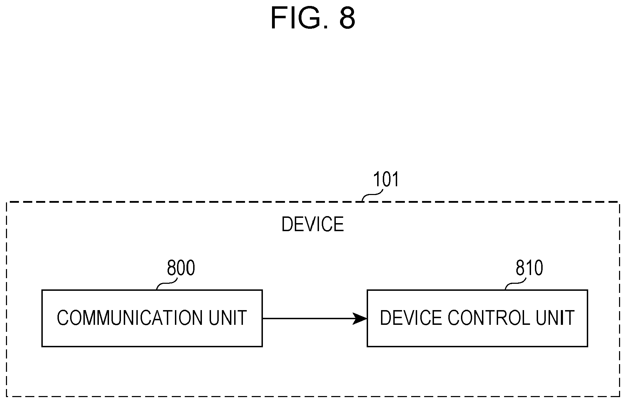

Fig. 8 is a block diagram illustrating an example of the system configuration of the device 101. The device 101 includes a communication unit 800 and a device control unit 810, as illustrated in Fig. 8.

The communication unit 800 corresponds to the communication circuit 450 in Fig. 4. The communication circuit 800 communicates with another device other than the device 101 (e.g., the local server 102) via wired communication or wireless communication, such as a network. The communication circuit 800 performs communication via a wired LAN such as a network conforming to the Ethernet (a registered trademark) standard, for example.

The device control unit 810 corresponds to the input/output circuit 410 and processing circuit 470 in Fig. 4. The device control unit 810 reads in control data that the communication unit 800 has received, and controls the operations of the device 101. The device control unit 810 also controls output of processing results of having controlled the operations of the device 101. For example, the device control unit 810 reads in and processes control data that the communication unit 800 has received, by the processing circuit 470, performs input/output control of the input/output circuit 410, and so forth.

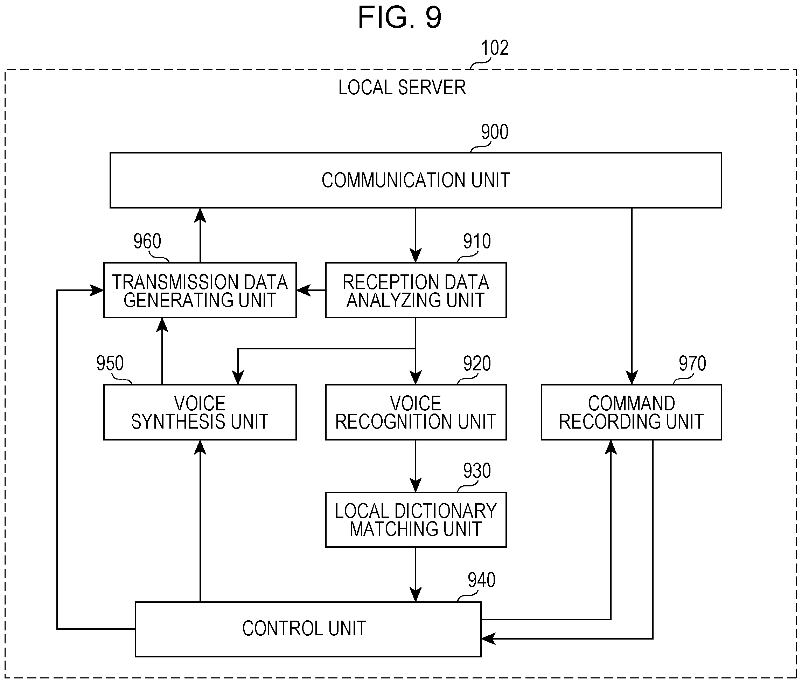

Fig. 9 is a block diagram illustrating an example of the system configuration of the local server 102. The local server 102 includes a communication unit 900, a reception data analyzing unit 910, a voice recognition unit 920, a local dictionary matching unit 930, a control unit 940, a voice synthesis unit 950, a transmission data generating unit 960, and a command recording unit 970, as illustrated in Fig. 9.

The communication unit 900 corresponds to the first communication circuit 551 and second communication circuit 552 in Fig. 5. The communication unit 900 communicates with devices other than the local server 102 (e.g., the voice input/output device 240 and device 101) via wired communication or wireless communication, such as a network. The communication unit 900 connects to a communication network such as the information communication network 220 or the like via wired communication or wireless communication, and further communicates with the cloud server 111 via the communication network. The communication unit 900 performs communication via a wired LAN such as a network conforming to the Ethernet (a registered trademark) standard, for example. The communication unit 900 hands data received from other devices and the cloud server 111 and so forth to the reception data analyzing unit 910. The communication unit 900 transmits data generated by the transmission data generating unit 960 to other devices, the cloud server 111, and so forth.

The reception data analyzing unit 910 corresponds to the processing circuit 570 in Fig. 5. The reception data analyzing unit 910 analyzes the type of data that the communication unit 900 has received. The reception data analyzing unit 910 also judges, as the result of having analyzed the type of received data, whether to perform further processing internally in the local server 102, or to transmit the data to another device. In a case of the former, the reception data analyzing unit 910 hands the received data to the voice recognition unit 920 and so forth. In a case of the latter, the reception data analyzing unit 910 decides a combination of the device to transmit to next, and data to be transmitted to that device.

The voice recognition unit 920 is realized by the processing circuit 570, the acoustic model database 580, and the linguistic model database 581, illustrated in Fig. 5. The voice recognition unit 920 converts voice signals into text string data. More specifically, the voice recognition unit 920 acquires, from the acoustic model database 580, information of an acoustic model registered beforehand, and converts the voice data into phonemic data using the acoustic model and frequency characteristics of the voice data. The voice recognition unit 920 further acquires information regarding a linguistic model from the linguistic model database 581 that has been registered beforehand, and converts the phonemic data into particular text string data based on the linguistic mode and the array of the phonemic data. The voice recognition unit 920 hands the converted text string data to the local dictionary matching unit 930.

The local dictionary matching unit 930 is realized by the processing circuit 570 and the local dictionary database 584 in Fig. 5. The local dictionary matching unit 930 converts the text string data into semantic tags. A semantic tag specifically is a keyword indicating a device that is the object of control, a task content, and so forth. The local dictionary matching unit 930 matches the received text string data and the local dictionary database 584, and extracts a semantic tag that agrees with the relevant text string data. The local dictionary database 584 stores text strings such as words and so forth, and semantic tags corresponding to the text strings, in a correlated manner. Searching within the local dictionary database 584 for a text string that agrees with the received text string extracts a semantic tag that agrees with, i.e., matches, the received text string.

The control unit 940 corresponds to the processing circuit 570 in Fig. 5. The control unit 940 performs determination processing of whether or not offload command data is recorded in the command recording unit 970, and performs processing of matching offload command data recorded in the command recording unit 970 with sematic tags.

The voice synthesis unit 950 is realized by the processing circuit 570, speech element database 582, and prosody control database 583 in Fig. 5. The voice synthesis unit 950 converts text string data into voice signals. Specifically, the voice synthesis unit 950 acquires information of a speech element model and prosody control model that have been registered beforehand, from the speech element database 582 and prosody control database 583, and converts the text string data into particular voice signals, based on the speech element model, prosody control model, and text string data.

The transmission data generating unit 960 corresponds to the processing circuit 570 in Fig. 5. The transmission data generating unit 960 generates transmission data from the combination of the device to transmit to next and data to be transmitted to that device, that the reception data analyzing unit 910 has decided.

The command recording unit 970 corresponds to the memory 540 in Fig. 5. The command recording unit 970 records offload command data that the cloud server 111 has transmitted to the local server 102.

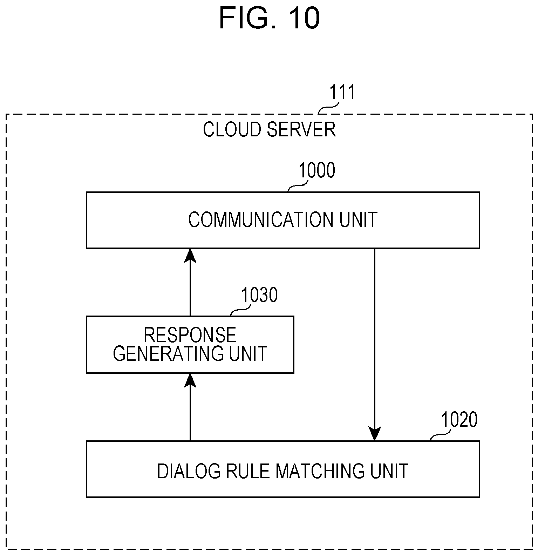

Fig. 10 is a block diagram illustrating an example of the system configuration of the cloud server 111. The cloud server 111 includes a communication unit 1000, a dialog rule matching unit 1020, and a response generating unit 1030, as illustrated in Fig. 10.

The communication unit 1000 corresponds to the communication circuit 650 in Fig. 6. The communication unit 1000 connects to a communication network such as the information communication network 220 or the like via wired communication or wireless communication, such as a network, and further communicates with another device (e.g., the local server 102) via the communication network. The communication unit 1000 performs communication via a wired LAN such as a network conforming to the Ethernet (a registered trademark) standard, for example.

The dialog rule matching unit 1020 is realized by the processing circuit 670 and dialog rule database 691 in Fig. 6. The dialog rule matching unit 1020 matches semantic tags and their conditions, and converts into processing IDs for reference by the offload command generating database 692.

The response generating unit 1030 is realized by the processing circuit 670 and offload command generating database 692 in Fig. 6. The response generating unit 1030 references the offload command generating database 692, and generates control signals to control the device 101 that is the object of control. Further, the response generating unit 1030 generates text string data of text information to be provided to the user 5100, based on the results of matching.

Fig. 11 is a diagram illustrating a specific example of registered content in the local dictionary database 584. The local dictionary database 584 stores information of text strings such as words or the like, and semantic tags, in a mutually associated manner. A semantic tag indicates a logical expression representing the meaning of a text string. A semantic tag can have a value as a variable. For example, the table in Fig. 11 shows the local dictionary database 584 storing the text string "SCHEDULE TO RECORD" and the semantic tag <schedule> in an associated manner. The local dictionary database 584 also stores the text string "VOLUME 20" and the semantic tag representing an expression "[<volume>]=20] in an associated manner. While <volume> is a semantic tag representing the meaning of the text string "VOLUME", semantic tags in brackets [ ] can serve as variables that store values.

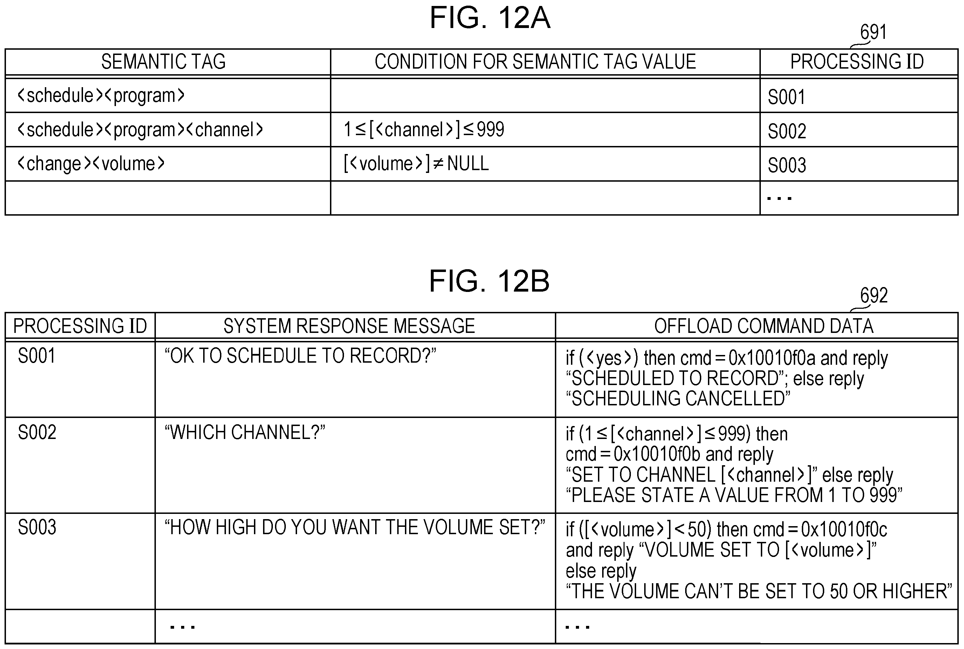

Figs. 12A and 12B respectively show specific examples of the registered content of the dialog rule database 691 and offload command generating database 692. For example, Fig. 12A shows a specific example of the dialog rule database 691. The dialog rule database 691 stores information of semantic tags, conditions of semantic tag values, and processing IDs, in a manner associated with each other. For example, in a case where a text string includes multiple words, such as the semantic tag <schedule><program> corresponding to the text string "SCHEDULE TO RECORD", the semantic tag corresponding to such a text string may be a combination of multiple semantic tags. A condition of a semantic tag value is a condition set to the semantic tag, and is a condition relating to a value substituted into that semantic tag. A processing ID is a number uniquely allocated to each item in the dialog rule database 691.

Fig. 12B illustrates a specific example of the offload command generating database 692. The offload command generating database 692 stores processing IDs, system response messages, and offload command data, in a manner associated with each other. A system response message is a response message directed toward the user in dialog between the user and the spoken dialog agent system 1. Offload command data is command data for processing regarding the user's reply as to the system response message, and is command data corresponding to multiple patterns of dialog between the user and the spoken dialog agent system 1. One piece of offload command data is configured so as to correspond to multiple types of replies from the user. Such offload command data reduces the communication between the cloud server 111 and the local server 102, and reduces the load on the local server 102. Further, in this example, the offload command data includes a simple recognition command and a control command corresponding thereto, so processing based on offload command data is simple. A processing ID is a number uniquely allocated to each item in the offload command generating database 692. Processing IDs in the offload command generating database 692 correspond to the processing IDs in the dialog rule database 691. In a case where the processing IDs are the same, the system response message and offload command data in the offload command generating database 692 correspond to the semantic tags and the conditions of the semantic tag values in the dialog rule database 691. For example, system response messages in the offload command generating database 692 are response message as to semantic tags in the dialog rule database 691. The contents of the offload command data in the offload command generating database 692 are related to the semantic tags and the conditions of the semantic tag values in the dialog rule database 691.

### [Operation of Spoken Dialog Agent System]

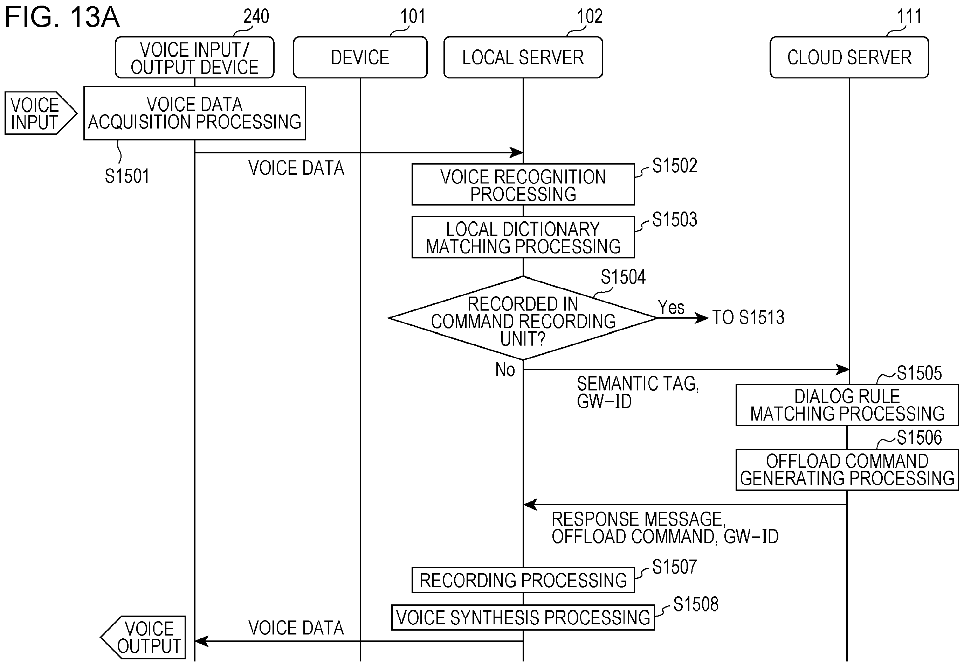

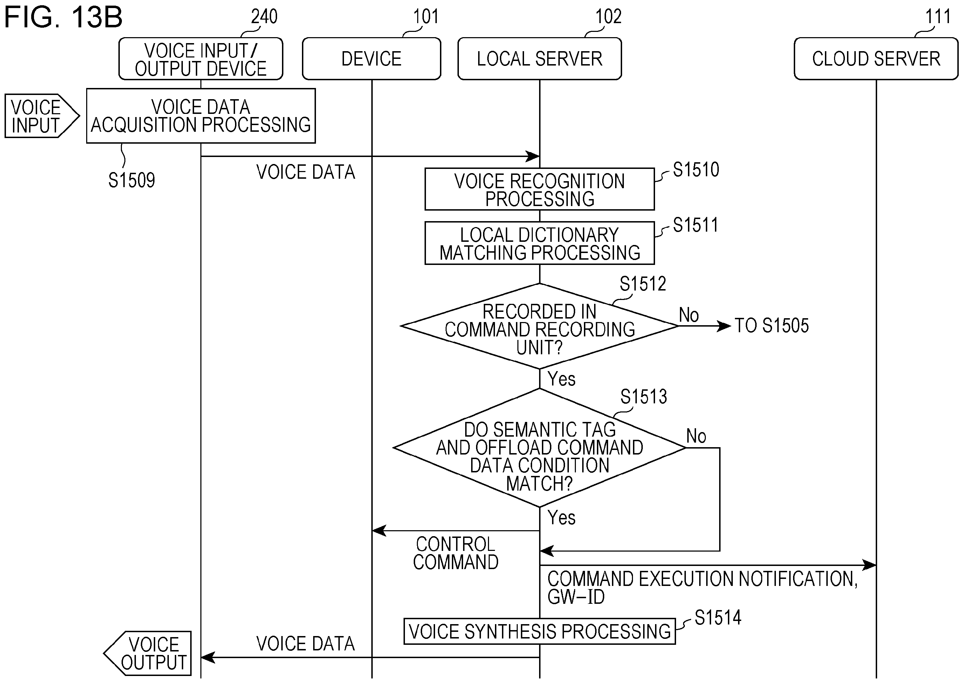

Next, the flow of processing to reduce response time of the spoken dialog agent system 1 will be described, regarding operations of the spoken dialog agent system 1. Figs. 13A and 13B illustrate a sequence of processing for reducing response time of the spoken dialogue agent system 1. This sequence is started when the user 5100 starts some sort of instruction to the voice input/output device 240 by voice.

Upon the user 5100 inputting an instruction to the voice input/output device 240 by voice, the voice input/output device 240 acquires voice data of the user 5100 in step S1501, as illustrated in Fig. 13A. The communication circuit 303 of the voice input/output device 240 transmits the acquired voice data to the local server 102. The local server 102 receives this voice data. Note that the following description will be made with the understanding that the above instruction is the first voice uttered in a dialog with multiple exchanges carried out between the user 5100 and the spoken dialog agent system 1. Accordingly, Fig. 13A illustrates a sequence of the spoken dialog agent system 1 in a case where a voice has been uttered for the first time.

Next, in step S1502, the local server 102 receives the voice data from the voice input/output device 240, and performs speech recognition processing of the voice data. Speech recognition processing is processing for the voice recognition unit 920 that the local server 102 has to recognize the speech of the user. Specifically, the local server 102 has the information of the acoustic model and linguistic model registered in the acoustic model database 580 and linguistic model database 581. When the user 5100 inputs voice to the voice input/output device 240, the CPU 530 of the local server 102 extracts frequency characteristics from the voice of the user 5100, and extracts phonemic data corresponding to the extracted frequency characteristics from the acoustic model stored in the acoustic model database 580. Next, the CPU 530 matches the array of extracted phonemic data to the closest text string data in the linguistic model held in the linguistic model database 581, thereby converting the phonemic data into text string data. As a result, the voice data is converted into text string data.

Next, in step S1503, the local server 102 performs local dictionary matching processing of the text string data. Local dictionary matching processing is processing where the local dictionary matching unit 930 that the local server 102 has converts the text string data into a semantic tag. Specifically, the local server 102 stores information of dictionaries registered in the local dictionary database 584. The CPU 530 of the local server 102 matches the text string data converted in step S1502 and the local dictionary database 584, and outputs a semantic tag that agrees with the text string data, i.e., a semantic tag corresponding to this text string data.

Further, in step S1504, the local server 102 determines whether or not offload command data received from the cloud server 111 is recorded in the command recording unit 970. In a case where such data is not recorded therein (No in step S1504), the local server 102 transmits a combination of the semantic tag and its own gateway ID to the cloud server 111, and the flow advances to step S1505. Note that the above-described steps 1501 through S1503 are processing for the first voice that the user 5100 has uttered in the dialog with multiple exchanges between the user 5100 and the spoken dialog agent system 1, so offload command data has neither been generated nor recorded in the command recording unit 970. Accordingly, the series of processing in steps S1501 through S1508 performed before outputting a system response message to the user 5100 continues to be selected in the subsequent processing.

However, in a case partway through dialog between the user 5100 and the spoken dialog agent system 1, there are cases where offload command data has been generated and recorded in the command recording unit 970. In a case where offload command data has been recorded (Yes in step S1504), the series of processes in steps S1509 through S1514 that is performed after a system response message has been output to the user 5100 is selected in the subsequent processing, such as illustrated in Fig. 13B. In this case, the processing of the local server 102 advances from step S1504 to step S1513.

In step S1505 following step S1504, the cloud server 111 performs dialog rule matching processing regarding the semantic tag that has been received. This dialog rule matching processing is processing where the dialog rule matching unit 1020 of the cloud server 111 converts the semantic tag into a processing ID. Specifically, the cloud server 111 stores information of dialog rules stored in the dialog rule database 691. Dialog rule information includes semantic tags, and conditions and processing IDs for the semantic tag values. The CPU 671 of the cloud server 111 matches the semantic tag converted in step S1503 and the dialog rule database 691, confirms the condition of a semantic tag value stored in the dialog rule database 691 and corresponding to this semantic tag, and converts this semantic tag into a suitable corresponding processing ID. For example, in a case where this semantic tag is the <schedule><program> illustrated in Fig. 12A, the semantic tag is converted to processing ID "S001 ".

Next, the cloud server 111 performs offload command generating processing in step S1506. This offload command generating processing is processing for generating a system response message of offload command data using the response generating unit 1030 that the cloud server 111 has. Specifically, the cloud server 111 has information of system response messages and offload command data stored in the offload command generating database 692. The CPU 671 of the cloud server 111 matches the processing ID converted in step S1505 with the offload command generating database 692, and outputs a system response message and offload command data corresponding to this processing ID. For example, in a case where the processing Id is "S001" in the example in Fig. 12B, a system response message "OK TO SCHEDULE TO RECORD?", and offload command data "if (<yes>) then cmd = 0x10010f0a and reply 'SCHEDULED TO RECORD" else reply' SCHEDULING CANCELLED'" are output. The cloud server 111 combines the generated system response message and offload command data with the gateway ID and transmits to the local server 102.

In step S1507, the local server 102 records the system response message, offload command data, and gateway ID, received from the cloud server 111, in the command recording unit 970 in a correlated manner. Specifically, the CPU 530 of the local server 102 stores the system response message, offload command data, and gateway ID, in memory 540 corresponding to the command recording unit 970, in a correlated manner.

In the following step S1508, the local server 102 performs voice synthesis processing. Voice synthesis processing is processing where the voice synthesis unit 950 that the local server 102 has converts the system response message into voice data. Specifically, the local server 102 stores speech element information registered in the speech element database 582, and prosody information registered in the prosody control database 583. The CPU 530 of the local server 102 reads in the speech element information registered in the speech element database 582 and the prosody information registered in the prosody control database 583, and converts the text string data of the system response message into particular voice data. The local server 102 then transmits the voice data converted in step S1508 to the voice input/output device 240. Further, the voice input/output device 240 that has received the voice data outputs the system response message to the user 5100 as voice.

Referencing Fig. 13B when the user 5100 subsequently inputs voice to the voice input/output device 240, the voice input/output device 240 acquires voice data of the user 5100 in step S1509. The voice input/output device 240 transmits the acquired voice data to the local server 102, and the local server 102 recieves this voice data. There are cases where an appropriate reply to the system response message is included in the voice data, and cases where an appropriate reply is not included. Judgement regarding this is made in processing performed later. Thereafter, the series of processing of steps S1509 through S1514 performed after outputting the system response message to the user 5100, is performed. Note that in a case where the voice input/output device 240 does not detect voice input for a predetermined amount of time for longer, for example, the series of processing including the processing of steps S1501 through S1508 may be ended.

Next, in step S1510, the local server 102 receives voice data from the voice input/output device 240, and further performs speech recognition processing to convert this voice data into text string data, in the same way as in the processing of step S1502. Further, in step S1511, the local server 102 performs local dictionary matching processing in the same way as in the processing of step S1503, to convert the converted text string data into a semantic tag.

In the following step S1512, the local server 102 determines whether or not offload command data received from the cloud server 111 is recorded in the command recording unit 970. In a case where offload command data is recorded in the command recording unit 970 (Yes in step S1512), the local server 102 advances to the processing in step S1513. The recorded offload command data is data that was recorded in step S1507. In the present example, offload command data s recorded in the command recording unit 970 in step S1507 and a system response message is output as voice in step S1508, so the processing of step S1513 is performed.

However, in a case where no offload command data is recorded (No in step S1512), the series of processing in steps S1501 through S1508 before the system response message is output to the user, for example, is selected for the following processing.

In the following step S1513, the local server 102 determines whether or not the semantic tag converted in step S1511 and the condition included in the offload command data recorded in the command recording unit 970 match. If these match (Yes in step S1513), the local server 102 transmits, out of the control commands described in the offload command data, a control command that has been found to match the condition, to the device 101, and outputs, out of messages described in the offload command data, text string data of a message found to match the condition. The local server 102 further combines an execution notification of the control command and a gateway ID, and transmits to the cloud server 111. The cloud server 111 that has received this recognizes completion of control of the device 101 involving dialog with multiple exchanges between the user 5100 and the spoken dialog agent system 1. The local server 102 then advances to the voice synthesis processing in step S1514.

On the other hand, if these do not match (No in step S1513), the local server 102 outputs, out of messages described in the offload command data, text string data of a message found not to match the condition. Further, the local server 102 outputs, out of the control commands described in the offload command data, a control command found not to match the condition, but in the present example illustrated in Fig. 12B, no control command is output. Note that a control command for being found to not match, that is different from control command for being found to match, may be described in the offload command data, and the local server 102 may output this control command. The local server 102 combines a non-execution notification of the control command and the gateway ID, and transmits to the cloud server 111. The local server 102 further advances to the voice synthesis processing in step S1514.

Assumption will be made that the offload command data illustrated in Fig. 12B "if (<yes>) then cmd = 0x10010f0a and reply 'SCHEDULED TO RECORD" else reply 'SCHEDULING CANCELLED'" is recorded in the command recording unit 970, for example, and that the system response message "OK TO SCHEDULE TO RECORD?" has been output from the voice input/output device 240. In a case where the user utters "Yes" "No" or any other phrase, the local server 102 converts the voice data into "Yes" "No" or "phrase content" in the speech recognition processing in step S3510. Thereafter, in the local dictionary matching processing in step S1511, the local server 102 converts the text string "Yes" "No" or "phrase content" into a semantic tag <yes>, <no>, or <keyword of phrase content>. In step S1512, the local server 102 determines that offload command data is recorded in the command recording unit 970. In step S1513, the local server 102 determines whether or not the semantic tag <yes>, <no>, or <keyword of phrase content> and condition of the offload command data match. In this example, the condition of the offload command data is "if(<yes>)", so in a case where the semantic tag is <yes>, the semantic tag and the condition of the offload command data match. In a case where the semantic tag is <no>, or <keyword of phrase content>, i.e., anything other than <yes>, the semantic tag and the condition of the offload command data do not match. In a case of matching, the local server 102 transmits the control command "cmd = 0x10010f0a" to the device 101, and outputs the text string data of the message "SCHEDULED TO RECORD". In a case of not matching, the local server 102 only outputs text string data of the message "SCHEDULING CANCELLED".

In step S1514, the local server 102 performs the voice synthesis processing in step S1514. In this voice synthesis processing, the local server 102 converts the message output relating to the processing in step S1513 into voice data, in the same way as in the processing of step S1508. For example, the text string data of a message exemplified above "SCHEDULED TO RECORD", or "SCHEDULING CANCELLED", is converted into voice data. The local server 102 transmits the voice data converted in step S1514 to the voice input/output device 240. The voice input/output device 240 that has received the voice data further outputs the message to the user 5100 as voice.

As described above, in the processing of steps S1501 through S1514, processing relating to the dialog with multiple exchanges between the user 5100 and the spoken dialog agent system 1 is performed by the local server 102, and generating of offload command data is performed by the cloud server 111. Accordingly, communication between the local server 102 and the cloud server 111 is performed at the time of generating offload command data, and does not need to be performed for each dialog exchanged between the user 5100 and the spoken dialog agent system 1. As a result, the number of times of communication between the local server 102 and cloud server 111 can be suppressed, thereby reducing communication time. The spoken dialog agent system 1 according to this embodiment can reduce the response time of the spoken dialog agent system 1 by offloading simple recognition commands and control commands corresponding thereto to the local side, i.e., reducing the load. The cloud server 111 that can have a large database generates the offload command data, so the load of the local server 102 is kept low.

Although the above description of the operations of the spoken dialog agent system 1 has been a description regarding a case where the user 5100 speaks for the first time in step S1501, the voice in step S1501 does not have to be identified as being at which point in the dialog.

Although offload command data including one condition and a command corresponding to this condition has been exemplified in the embodiment, this is not restrictive. The offload command data may include two or more conditions, and commands corresponding to the conditions. This enables control of the device 101 capable of handling various replies by the user 5100.

Although description has been made that one offload command data is used in processing relating to dialog between the user 5100 and the spoken dialog agent system 1 in the embodiment, two or more offload command data may be used. For example, in a case where the condition for first offload command data is not satisfied, processing may be performed using second offload command data.

Although in the spoken dialog agent system 1 according to the embodiment, the local server 102 transmits a semantic tag to the cloud server 111 in step S1504, this is not restrictive, and text string data may be transmitted. In this case, if the cloud server 111 has a dictionary database like the local dictionary database 584, the cloud server 111 may convert the received text string data into a semantic tag. The cloud server 111 can hold a dictionary database that is larger than what the local server 102 can hold, and thus can convert a wide variety and range of text string data into semantic tags.

Although description has been made that in the spoken dialog agent system 1 according to the embodiment, the cloud server 111 transmits a system response message and offload command data together to the local server 102, these may be transmitted separately with a time difference. For example, the cloud server 111 may transmit offload command data after transmitting a system response message, and the timing of transmitting the offload command data may be any time in a period after transmission of the system response message in step S1506 up to before performing the processing in step S1512. For example, the cloud server 111 may estimate the above-described period or may store the above-described period that has been estimated, and transmit the offload command data within the estimated period. Transmission of the offload command data preferably is prior to voice output of the system response message by the voice input/output device 240. Such a timing may be estimated, and the offload command data may be transmitted based on the estimated timing.

### [Advantages, etc.]

As described above, the cloud server 111 that is one aspect of a dialog processing device according to an embodiment of the present disclosure includes the communication unit 1000 serving as an acquisition unit to acquire speech recognition results, and the dialog rule matching unit 1020 and response generating unit 1030 serving as a dialog processing units. The dialog rule matching unit 1020 and response generating unit 1030 decide response information based on speech recognition results acquired by the communication unit 1000, and decide processing information according to the response information. Note that processing information includes estimated reply information regarding the user's reply estimated with regard to the response information, and action control information in accordance with the estimated reply information. The communication unit 1000 transmits the decided response information and processing information. For example, the response information may be a system response message. For example, the estimated reply information may be information related to a condition included in offload command data, and action control information may include a control command and message in accordance with a condition, included in offload command data.

In the above-described configuration, the cloud server 111 decides and transmits response information based on speech recognition results, and processing information in accordance with the response information. A device such as the local server 102 or the like that receives the response information and processing information from the cloud server 111 can output a response message as to recognition results of the user's voice, and can perform action control corresponding to the user's reply as to the response message, based on the estimated reply information and action control information in the processing information. The estimated reply information is information estimated based on the response information, and the action control information is information set in response to the estimated reply information. This processing information is not information generated after receiving a reply from the user in response to the reply, but is information set beforehand. Accordingly, when receiving a reply from the user, the device does not have to communicate with the cloud server 111 in order to acquire information corresponding to the reply. Thus, the number of times of communication between the device and the cloud server 111 when performing dialog with multiple exchanges with the user is reduced, and the response time of the device and the cloud server 111 can be reduced.

In the cloud server 111 that is one aspect of a dialog processing device according to an embodiment, the communication unit 1000 receives action control result information indicating the results of action control performed using action control information. For example, the action control result information may be execution notification of a control command. In the above-described configuration, the cloud server 111 can end an action relating to dialog processing between the user and a device such as the local server 102 or the like, by receiving action control result information. Accordingly, unnecessary standby and actions of the cloud server 111 can be reduced.

In the cloud server 111 that is one aspect of a dialog processing device according to an embodiment, the communication unit 1000 transmits response information and processing information together. In the above-described configuration, the frequency of the cloud server 111 performing communication is reduced, and the response time of the cloud server 111 and device such as the local server 102 or the like can be reduced. Specifically, the cloud server 111 transmits processing information without confirming the reply of the user as to the response information, so communication for confirming the reply of the user is unnecessary. Further, a situation can be prevented where the device such as the local server 102 or the like has received a reply as to the response information from the user but has not received processing information yet, and cannot perform the next action, leading to delay in processing.

In the cloud server 111 that is one aspect of a dialog processing device according to an embodiment, speech recognition results are acquired via the communication unit 1000. In the above-described configuration, the cloud server 111 acquires speech recognition results from a device such as the local server 102 or the like at a remote location. Accordingly, the cloud server 111 can be configured without being influenced by the environment where the voice was acquired.

The local server 102 that is another aspect of a dialog processing device according to an embodiment includes the voice recognition unit 920 serving as an acquisition unit that acquires speech recognition results, the communication unit 900, and the control unit 940 serving as an action control unit. The communication unit 900 receives response information based on first speech recognition results acquired by the voice recognition unit 920, and processing information in accordance with the response information. Note that processing information includes estimated reply information regarding the user's reply estimated with regard to the response information, and action control information in accordance with the estimated reply information. The response generating unit 940 performs actions based on the results of matching second speech recognition results acquired by the voice recognition unit 920 and estimated reply information.

In the above-described configuration, the local server 102 can output a response message to the user as to the first speech recognition results, based on response information based on the first speech recognition results of the voice of the user, and can perform action control corresponding to the reply from the user as to the response message, based on the estimated reply information and action information in the processing information. Further, the local server 102 can perform action based on the action control information corresponding to second speech recognition results of the voice of the user. This processing information is not information generated after receiving a reply from the user in response to the reply, but is information set beforehand. Accordingly, when receiving the second speech recognition results, the local server 102 does not have to communicate to acquire information corresponding thereto. Thus, the response time of the local server 102 can be reduced when performing dialog with multiple exchanges with the user.

In the local server 102 that is another aspect of a dialog processing device according to an embodiment, the communication unit 900 receives both response information and processing information. In the above-described configuration, the frequency of communication by the local server 102 is reduced, and response time of the local server 102 can be reduced. Specifically, the local server 102 receives processing information before acquiring the user's reply as to the response information, so there is no need to perform communication corresponding to the user's reply. Further, a situation can be prevented in which the local server 102 has received a reply as to the response information from the user but has not received processing information yet, and cannot perform the next action, leading to delay in processing.

In the local server 102 that is another aspect of a dialog processing device according to an embodiment, the communication unit 900 transmits first speech recognition results. In the above-described configuration, processing based on the first speech recognition results is performed by a device different from the local server 102, such as the cloud server 111 or the like. This reduces the processing load on the local server 102, and processing speed can be improved.

In the local server 102 that is another aspect of a dialog processing device according to an embodiment, the second speech recognition results are speech recognition results after a response based on response information received by the communication unit 900 has been played. In the above-described configuration, the second speech recognition results may include the user's reply to a response message based on response information. Accordingly, the local server 102 can perform processing appropriately corresponding to the user's reply.

In the cloud server 111 and local server 102 according to an embodiment, processing information includes a plurality of sets of estimated reply information and action control information. In the above-described configuration, control corresponding to various replies by the user can be performed.

In the cloud server 111 and local server 102 according to an embodiment, action control information includes second response information as to a user's reply, and action instruction information including an action instruction as to an object of action. For example, a user reply may include a message, estimated reply information may include message information corresponding to the content of the message, and action control information may include second response information and action instruction information corresponding to the message information. In the above-described configuration, an object of control can be controlled by actions based on action control information, while presenting a response to the user as to a reply, and receiving confirmation. For example, message information may be a semantic tag that corresponds to a semantic tag of a user's message and is included in a condition within offload command data. Second response information in accordance with message information may be a message in accordance with a condition in offload command data, and action instruction information in accordance with message information may be a control command in accordance with a condition within offload command data.

A dialog processing method of the cloud server 111 according to an aspect of an embodiment includes acquiring speech recognition results, deciding response information based on the acquired speech recognition results, deciding processing information in accordance with response information, and transmitting response information and processing information that have been decided. Processing information includes estimated reply information regarding a user's reply estimated with regard to the response information, and action control information in accordance with the estimated reply information.

A dialog processing method of the local server 102 according to another aspect of an embodiment includes acquiring and transmitting first speech recognition results, and receiving response information based on the first speech recognition results that have been transmitted, and processing information in accordance with the response information. Processing information here includes estimated reply information regarding a user's reply estimated with regard to the response information, and action control information in accordance with the estimated reply information. Further, in the dialog processing method, second speech recognition results are acquired, and an action based on action control information is performed in accordance with the results of matching the second speech recognition results that are acquired, and the estimated reply information.

The above-described dialog processing method yields advantages the same as the advantages provided by the dialog processing device according to embodiments. The above method may be realized by a processor such as a microprocessor unit (MPU) or a CPU, a circuit such as a large-scale integration (LSI) or the like, an integrated circuit (IC) card, a standalone module, or the like.

The processing of the embodiment may be realized by a software program or digital signals from a software program. For example, processing of the embodiment is realized by a program or digital signals from a program such as that below.

A program that realizes the processing of the cloud server 111 according to an aspect of an embodiment is a program that causes a computer to execute the following functions of acquiring speech recognition results, deciding response information based on the acquired speech recognition results, deciding processing information in accordance with response information, and transmitting response information and processing information that have been decided. Processing information includes estimated reply information regarding a user's reply estimated with regard to the response information, and action control information in accordance with the estimated reply information.

A program that realizes the processing of the local server 102 according to an aspect of an embodiment is a program that causes a computer to execute the following functions of acquiring first speech recognition results, and receiving response information based on the first speech recognition results that have been acquired, and processing information in accordance with the response information. Processing information here includes estimated reply information regarding a user's reply estimated with regard to the response information, and action control information in accordance with the estimated reply information. The program further causes the computer to execute control, based on action control information, in accordance with the results of matching the second speech recognition results that are acquired and the estimated reply information.

### [Other]

Although a dialog processing device and so forth according to an embodiment has been described above as examples of technology disclosed in the present disclosure, the present disclosure is not restricted to the embodiment. The technology in the present disclosure is also applicable to modifications of the embodiment to which modifications, substitutions additions, omissions, and so forth have been performed as appropriate, and other embodiments as well, as appropriate. The components described in the embodiment can be combined to form new embodiments or modifications.

As described above, general or specific embodiments of the present disclosure may be realized as a system, a method, an integrated circuit, a computer program, a recording medium such as a computer-readable CD-ROM, and so forth. General or specific embodiments of the present disclosure may also be realized as any combination of a system, method, integrated circuit, computer program, and recording medium.

The processing units included in the dialog processing device according to the above-described embodiment are typically realized as an LSI which is an integrated circuit. These may be individually formed into single chips, or part or all may be formed into a single chip.

The integrated circuit is not restricted to an LSI, and may be realized by dedicated circuits or general-purpose processors. A field programmable gate array (FPGA) capable of being programmed after manufacturing the LSI, or a reconfigurable processor of which the connections and settings of circuit cells within the LSI can be reconfigured, may be used.

In the above-described embodiment, the components may be configured as dedicated hardware, or may be realized by executing a software program suitable for each component. Each component may be realized by a program execution unit such as a CPU or other processor or the like reading out a software program recorded in a recording medium such as a hard disk, semiconductor memory, or the like, and executing the software program.

Further, the technology of the present disclosure may be a program, or may be a non-transient computer-readable recording medium in which the program is recorded. It is needless to say that the program may be distributed through a transfer medium such as the Internet or the like.

Also, the numbers used above, such as ordinals, numerical quantities, and so forth, are all only exemplary to describe the technology of the present disclosure in a specific manner, and the present disclosure is not restricted to the exemplified numbers. Also, the connection relations between components are only exemplary to describe the technology of the present disclosure in a specific manner, and connection relations to realize the function of the present disclosure are not restricted to these.

Also, the functional block divisions in the block diagrams are only exemplary, and multiple function blocks may be realized as a single functional block, or a single functional block may be divided into a plurality, or a part of the functions may be transferred to another functional block. Functions of multiple functional blocks having similar functions may be processed in parallel or time-division by a single hardware or software.

While a dialog processing device and so forth according to one aspect have been described by way of an embodiment, the present disclosure is not restricted to the embodiment. Various modifications to the embodiments and combinations of components of different embodiments which are conceivable by one skilled in the art may be encompassed by one aspect without departing from the essence of the present disclosure.

Note that the present disclosure is applicable as long as related to dialog between a spoken dialog agent system and a user. For example, the present disclosure is effective in a case where a user operates an electric home appliance or the like using the spoken dialog agent system. Assuming a case of a user operating a microwave or an oven capable of handling voice operations by giving an instruction "heat it up", the spoken dialog agent system can ask the user back for specific instructions, such as "heat it for how many minutes?" or "heat it to what temperature?" or the like, for example. The only user who is allowed to reply to this (the user regarding whom the agent system will accept instructions in response to its own question) is the user who gave the initial instruction of "heat it up".

Additionally, the present disclosure is also applicable to operations where the spoken dialog agent system asks back for specific content in response to abstract instructions given by the user. The content that the spoken dialog agent system asks the user back of may be confirmation regarding execution of an action or the like.

In the above-described aspect, input of voice by the user may be performed by a microphone that the system or individual home electric appliances have. Also, the spoken dialog agent system asking back to the user may be performed by a speaker or the like that the system or individual home electric appliances have.

In the present disclosure, "operation" may be an action of outputting voice to the user via a speaker, for example. That is to say, in the present disclosure, a "device" to be controlled may be a voice input/output device (e.g., a speaker).

In the present disclosure, "computer", "processor", "microphone", and/or "speaker" may be built into a "device" to be controlled, for example.

In the present disclosure, "phrase information" is information indicating a text string or the meaning thereof. "Text string data" and "semantic tag" in the above aspect are examples of phrase information.

Note that the technology described in the above aspect may be realized by the following type of cloud service, for example. However, the type of cloud service by which the technology described in the above aspect can be realized is not restricted to this.

Description will be made in order below regarding an overall image of service provided by an information management system using a type 1 service (in-house data center type cloud service), an overall image of service provided by an information management system using a type 2 service (IaaS usage type cloud service), an overall image of service provided by an information management system using a type 3 service (PaaS usage type cloud service), and an overall image of service provided by an information management system using a type 4 service (SaaS usage type cloud service).

### [Service Type 1: In-House Data Center Type Cloud Service]

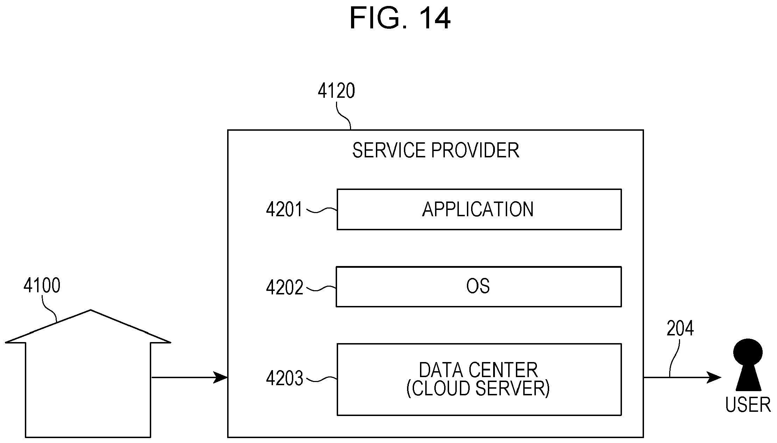

Fig. 14 is a diagram illustrating the overall image of services which the information management system provides in a service type 1 (in-house data center type cloud service), to which the spoken dialog agent system according to the embodiment is applicable. In this type, a service provider 4120 obtains information from a group 4100, and provides a user with service, as illustrated in Fig. 14. In this type, the service provider 4120 functions as a data center operator. That is to say, the service provider 4120 has a cloud server 111 to manage big data. Accordingly, the data center operator does not exist.

In this type, the service provider 4120 operates and manages the data center 4203 (cloud server). The service provider 4120 also manages operating system (OS) 4202 and applications 4201. The service provider 4120 provides services (arrow 204) using the OS 4202 and applications 4201 managed by the service provider 4120.

### [Service Type 2: IaaS Usage Type Cloud Service]

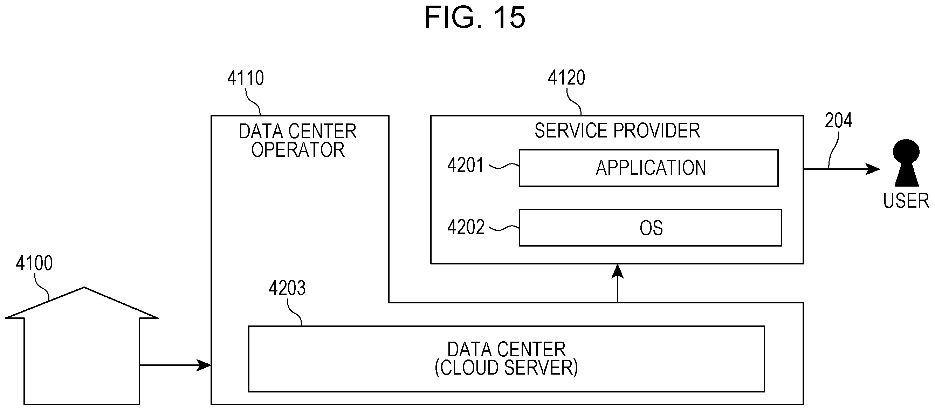

Fig. 15 is a diagram illustrating the overall image of services which the information management system provides in a service type 2 (IaaS usage type cloud service), to which the spoken dialog agent system according to the embodiment is applicable. IaaS stands for "Infrastructure as a Service", and is a cloud service providing model where the base for computer system architecture and operation itself is provided as an Internet-based service.

In this type, the data center operator 4110 operates and manages the data center 4203 (cloud server), as illustrated in Fig. 15. The service provider 4120 manages the OS 4202 and applications 4201. The service provider 4120 provides services (arrow 204) using the OS 4202 and applications 4201 managed by the service provider 4120.

### [Service Type 3: PaaS Usage Type Cloud Service]

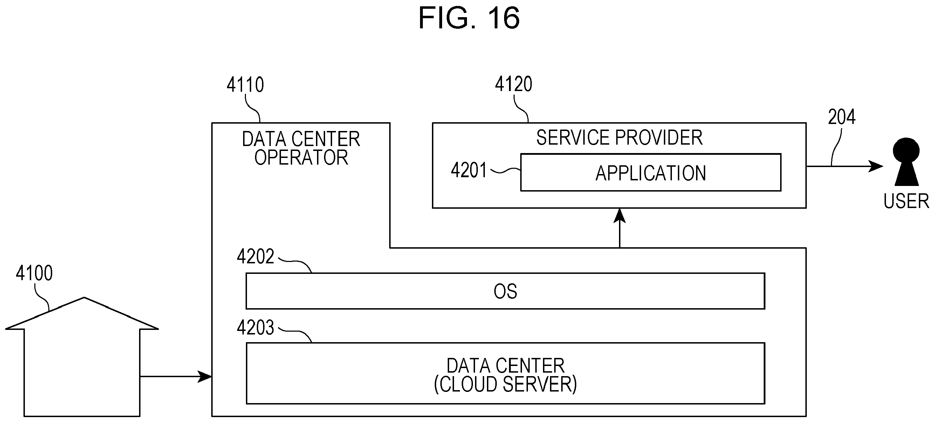

Fig. 16 is a diagram illustrating the overall image of services which the information management system provides in a service type 3 (PaaS usage type cloud service), to which the spoken dialog agent system according to the embodiment is applicable. PaaS stands for "Platform as a Service", and is a cloud service providing model where a platform serving as the foundation for software architecture and operation is provided as an Internet-based service.

In this type, the data center operator 4110 manages the OS 4202 and operates and manages the data center 4203 (cloud server), as illustrated in Fig. 16. The service provider 4120 also manages the applications 4201. The service provider 4120 provides services (arrow 204) using the OS 4202 managed by the data center operator 4110 and applications 4201 managed by the service provider 4120.

### [Service Type 4: SaaS Usage Type Cloud Service]

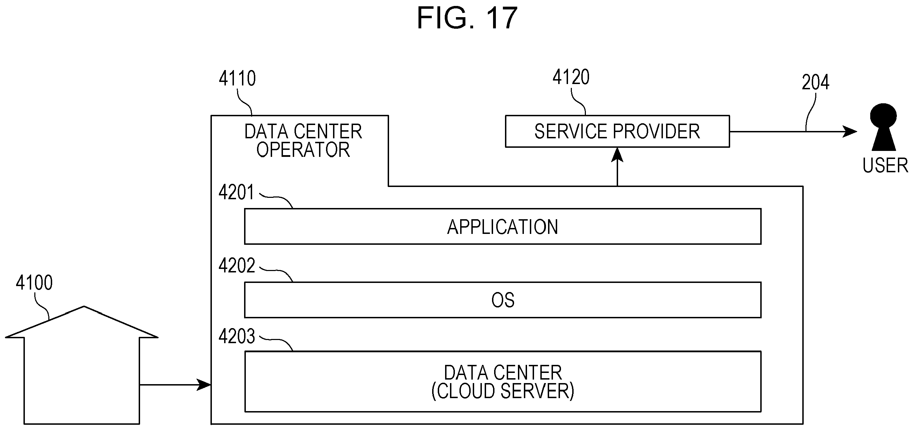

Fig. 17 is a diagram illustrating the overall image of services which the information management system provides in a service type 4 (SaaS usage type cloud service), to which the spoken dialog agent system according to the embodiment is applicable. SaaS stands for "Software as a Service". A SaaS usage type cloud service is a cloud service providing model having functions where users such as corporations, individuals, or the like who do not have a data center (cloud server) can use applications provided by a platform provider having a data center (cloud server) for example, over a network such as the Internet.

In this type, the data center operator 4110 manages the applications 4201, manages the OS 4202, and operates and manages the data center 4203 (cloud server), as illustrated in Fig. 17. The service provider 4120 provides services (arrow 204) using the OS 4202 and applications 4201 managed by the data center operator 4110.

In each of these types, the service provider 4120 performs the act of providing services. The service provider or data center operator may develop the OS, applications, database for big data, and so forth, in-house, or may commission this to a third party.

## Claims

1. An information processing method to be executed at in part in a computer for controlling at least one device through dialog with a user, the method comprising:
acquiring first voice information indicating a first voice of the user input from a microphone;
outputting, to a server via a network, first phrase information generated from the first voice information;
acquiring, from the server via the network, first response information determined in accordance with the first phrase information, the first response information indicating a first response message as to the first voice;
outputting, to a speaker, the first response message based on the first response information;
acquiring, from the server via the network, second response information associated with the first response information in the server, the second response information including a conditional branch instruction to be branched into a plurality of different instructions depending on a user's reply to the first response message;
acquiring second voice information indicating a second voice of the user input from the microphone, after the outputting of the first response message, the second voice including the user's reply to the first response message; and
causing the speaker and/or the at least one device to perform an operation by following an instruction that is determined in accordance with the conditional branch instruction and second phrase information generated from the second voice information,
wherein neither the second voice information nor the second phrase information is output to the server during a period from acquiring the second voice information to causing the operation to be performed.

2. The information processing method according to claim 1,
wherein the first response information and the second response information are acquired from the server at the same time.

3. The information processing method according to any one of claims 1 and 2,
wherein the second response information is selected from a plurality of pieces of second response information stored in the server, in accordance with the first phrase information and/or the first response information.

4. The information processing method according to any one of claims 1 to 3, further comprising:
outputting, to the server, an execution notification indicating that the operation has been executed.

5. The information processing method according to any one of claims 1 to 4, wherein at least one of the plurality of instructions includes an instruction for causing the speaker to output a second response message as to the second voice.

6. The information processing method according to any one of claims 1 to 5,
wherein at least one of the plurality of instructions includes an instruction for transmitting a control command to the at least one device.

7. The information processing method according to any one of claims 1 to 6, wherein
the network is the Internet, and
the method is executed at a local server that is communicable with the at least one device without through the Internet.

8. A non-temporary storage medium storing a program that causes the computer execute the information processing method according to any one of claims 1 to 7.

9. An information processing method to be executed at least in part in a second computer in a server, the second computer being communicable via a network with a first computer for controlling at least one device through dialog with a user, the method comprising:
acquiring, from a computer via the network, first phrase information indicating a first voice of an user input from a microphone, a text string corresponding to the first voice, and/or a meaning of the text string;
outputting, to the computer via the network, first response information indicating a first response message as to the first voice, in accordance with the first phrase information; and
outputting, to the computer via the network, second response information associated with the first response information, the second response information including a conditional branch instruction to be branched into a plurality of different instructions in accordance with phrase information indicating a user's reply to the first response message.

10. The information processing method according to claim 9,
wherein the computer causes the speaker and/or the at least one device to perform an operation, in accordance with an instruction that is determined by executing the conditional branch instruction with second phrase information generated from the second voice information.

11. The information processing method according to claim 10,
wherein neither the second voice information nor the second phrase information is acquired from the computer during a period from the computer acquiring the user's reply to causing the operation to be performed.

12. The information processing method according to any one of claims 10 and 11, further comprising:
acquiring, from the computer, an execution notification indicating that the operation has been executed.

13. The information processing method according to any one of claims 9 to 12,
wherein the first response information and the second response information are output to the first computer at the same time.

14. The information processing method according to any one of claims 9 to 13,
wherein at least one of the plurality of instructions includes an instruction for causing the speaker to output a second response message as to the second voice.

15. The information processing method according to any one of claims 9 to 14,
wherein at least one of the plurality of commands includes an instruction for transmitting a control command to the at least one device.

16. The information processing method according to any one of claims 9 to 15, further comprising:
identifying semantic information corresponding to the first voice by referencing to a plurality of pieces of semantic information in a database, after the acquiring of the first phrase information,
identifying the first response information associated with the identified semantic information by referencing to a plurality of pieces of first response information in the database; and
identifying the second response information associated with the identified first response information by referencing to a plurality of pieces of second response information in the database.

17. A non-transitory recording medium storing a program that causes the second computer to execute the information processing method according to any one of claims 9 to 16.
